# EUROPÄISCHE PATENTSCHRIFT

(11) **EP 0 387 774 B1**
(45) Veröffentlichungstag und Bekanntmachung des Hinweises auf die Patenterteilung: **02.02.1994**
(21) Anmeldenummer: 90104699.5
(22) Anmeldetag: 13.03.1990
(51) Int. Cl.: A61C 17/12, A61C 17/06, A61M 1/00

(54) **Vorrichtung zum Abscheiden von flüssigen und festen Bestandteilen aus dem aus dem Mund eines Patienten kommenden Saugmediengemisch**
Device to separate liquid and solid components from a sucking medium mixture leaving a patient's mouth
Dispositif pour séparer des ingrédients liquides et solides d'un mélange de milieu aspiré qui sort de la bouche d'un patient

(30) Priorität: 15.03.1989 DE 3908337
(43) Veröffentlichungstag der Anmeldung: 19.09.1990
(73) Patentinhaber: DÜRR-DENTAL GMBH & CO. KG, D-74302 Bietigheim-Bissingen (DE)
(72) Erfinder: Hofmann, Hans-Joachim, Dipl.-Ing. (FH), D-7064 Remshalden 3 (DE)
(74) Vertreter: Utermann, Gerd, Dipl.-Ing.

(56) Entgegenhaltungen:
- DE-C- 2 713 321
- US-A- 4 293 300

## Beschreibung

Die Erfindung betrifft eine Vorrichtung zum Abscheiden von flüssigen und festen Bestandteilen aus dem aus dem Mund eines Patienten kommenden Saugmediengemisch mit den im Oberbegriff von Anspruch 1 aufgeführten Merkmalen.

Aus DE 27 13 321 A1 und C2 ist eine Vorrichtung mit den vorgenannten Merkmalen bekannt, die mit hohem Abscheidegrad sehr zuverlässig die Trennung zwischen Luft und Sekret bewirkt und zwar so, daß im Arbeitsbetrieb ein Durchschleusen der flüssigen und festen Bestandteile aus dem Abscheideraum und durch den Flüssigkeits-Feststoff-Auslaß zum Abfluß während des Saugvorganges ohne Unterbrechung des Saugvorganges mit Aufrechterhaltung des Unterdruckes im Abscheideraum erfolgt. Dafür ist zwischen Abscheideraum und Flüssigkeits-Feststoff-Auslaß eine Schleuse angeordnet mit beiderseits des Schleusenraumes angeordneten wechselweise intermittierend betätigten Schleusen-Verschluß-Organen. Die Betätigung dieser Schleusen-Verschluß-Organe, die auch als Schleusenventile bezeichnet werden, erfolgt in Abhängigkeit vom Füllstand im Sekret-sammelraum. Dieser Füllstand kann mit Hilfe eines Schwimmers oder mit Hilfe von in unterschiedlichen Höhen angeordneten Fühlern ermittelt werden.

Die langjährige praktische Benutzung hat nun gezeigt, daß von derartigen - als Separierautomatik bezeichneten - Geräten recht unterschiedliche Mengen von anfallendem Flüssigkeits-Feststoff-Gemisch zu verarbeiten sind. Dabei kann es vorkommen, daß nur sehr geringe Mengen anfallen und diese trotzdem einwandfrei und keine Ablagerungen hervorrufend abzutransportieren sind und daß andererseits auch sehr große Mengen pro Zeiteinheit durchzuschleusen sind, ohne daß die Überfüllsicherung schalten soll. Das war mit den bisherigen Einrichtungen sowohl bei mit Schwimmern als auch mit Fühlern arbeitenden Einrichtungen nicht hinreichend gut zu bewältigen, selbst dann nicht, wenn man die Vorrichtung ständig mit einem bestimmten Takt sich entleeren ließ oder wenn man eine Saugpumpe an die Stelle der Schleusenventile setzte.

In DE-PS 34 20 278 ist eine medizinische Saugvorrichtung, insbesondere für die Hals/Nasen/Ohren-Behandlung beschrieben, bei der es um eine zweckmäßige Ausgestaltung der Einrichtung mit einer automatisch arbeitenden Spül- und Reinigungs- sowie Desinfektionsanordnung geht, die entsprechendes Druckwasser in den Behälter spült, wenn die Behandlung abgeschlossen ist und die durch eine Programmsteuerung dafür sorgt, daß diese Spülvorgänge nach jedem Behandlungsvorgang die Entsorgung des Flascheninhalts und die Reinigung der Sekretsammelflasche selbsttätig erfolgen läßt und daß auch nach dem Abschalten des Unterdruckerzeugers die Folgesteuerung für eine Durchspülung und ein Feuchthalten des Bodens des Gefäßes sorgt. Für diese Zwecke sind verschiedene Ventile vorgesehen, die in Folgeschaltung mit einer elektronischen Schalt- und Steuereinrichtung betätigt werden. Eine soche Elektronik hat einen zentralen Taktgeber für den Programmablauf, und es kann auch eine Änderung der Reihenfolge und der Länge der Schritte des Programms vorgenommen werden, wie es bei elektronischen Programmschalteinrichtungen üblich ist. Über anwendungsspezifische Taktgeschwindigkeitsfragen bei besonderen Bedürfnissen von speziellen medizinischen Behandlungen ist dieser Schrift nichts zu entnehmen. Für den kontinuierlichen Betrieb über längere Absaugzeiten, wie sie beim Zahnarzt oder anderen medizinischen Behandlungen als in der Hals/Nasen/Ohren-Praxis vorkommen, ist die Vorrichtung nicht geeignet, weil sie nicht in der Lage ist, auf relativ kleinem Raum größere Mengen von abgesaugtem Sekret, ggf. mit beigegebenen Flüssigkeiten für Spülung und Desinfektion in kurzen Taktabständen ohne Unterbrechung des Saugvorganges aus dem Abscheidebehälter herauszuführen. Dafür fehlt eine Schleusenanordnung od. dgl.. Die erfindungsgemäße Vorrichtung hat eine solche bekannte Schleusenanordnung und befaßt sich mit einer Anpassung der Entleerungsgeschwindigkeit an den Bedarf.

Der Erfindung liegt die Aufgabe zugrunde, Vorrichtungen der eingangs genannten Art mit einfachen Mitteln so auszustatten, daß sehr unterschiedliche Mengen von anfallendem Sekret einwandfrei abzuführen sind und daß die dazu erforderlichen Einrichtungen einfach und sicher wirken sowie gut zu warten sind.

Erfindungsgemäß ist vorgesehen, daß im Sekret-Sammelraum ein Schnelltaktfühler angeordnet ist, der bei Erreichen einer vorbestimmten, größeren Füllhöhe im Sekret-Sammelraum die Steuerung auf einen schnelleren Takt für die Betätigung der Schleusenventile umschaltet.

Der Einbau einer solchen, die Änderung der Taktfolge bewirkenden Einrichtung und diese Mittel zur Erfassung des Zustandes, der die Änderung der Taktfolge erforderlich macht, kann ohne Schwierigkeiten und ohne nennenswerten Zusatzaufwand erfolgen, wobei die Separierautomatik - ganz gleich welcher Bauart - in ihrem Grundprinzip nicht geändert zu werden braucht. Man kann nun auch die sich evtl. aus Schaumbildungen sonstigen Ursachen ergebenden Probleme durch einen schnelleren Takt der Entleerung vermeiden.

Zur Erfassung des anfallenden Flüssigkeit-Feststoff-Anteils im Sekretstrom kann man sich also dieser in verschiedener Weise auszugestaltenden Mittel zur Erfassung eines Durchsatzes oder zur Messung einer Ansammlung von Flüssigkeiten und/oder Feststoffen bedienen und mit geeigneten Auswertmitteln, wie z. B. geeigneten elektronischen Auswertschaltungen das der jeweiligen Konstruktion entsprechende Signal gewinnen, um den Abtransport aus dem Sekret-Sammelraum den Bedürfnissen anzupassen.

Die Erfindung geht davon aus, daß der Sekretabtransport im Normalfall während der ganzen Zeit der Benutzung durch den Benutzer, wie den Zahnarzt, seine Helferin oder sonstige Mitarbeiter eingeschaltet ist und daß nur zum Verbessern des Abtransportes bei größeren Mengen ein Schnelltakt vorgesehen ist, der mit Hilfe eines Schnelltaktfühlers und einer zugehörigen Auswertschaltung für die erforderliche Zeit in Tätigkeit gesetzt wird. Mit dem vorstehend genannten Fühler, der mit den verschiedensten,bekannten Mitteln realisiert werden kann, läßt sich der Füllstand gut ermitteln und damit der Abtransport entsprechend anpassen. Solche Vorrichtungen haben in der Regel einen Überfüllfühler. Mit Hilfe dieses Überfüllfühlers und zugehöriger Schaltmittel, wie eines Ventils in der Reinluftleitung wird erreicht, daß mit Sicherheit keine Flüssigkeit in die Luftleitung und damit in die Saugmaschine gelangt. Demgemäß ist bei einer solchen Vorrichtung der Schnelltaktfühler unterhalb eines Überfüllfühlers anzuordnen. Das kann auf die verschiedene Weise erfolgen. Es können, wie u.a. aus US-PS 4,293,300 bekannt, von oben in den Raum Fühler hineinragen. Die bekannten Fühler dienen nur als Bezugsfühler, als Fühler für Minimalstand und als Fühler für Maximalstand. Nach der Erfindung ragen nun der Bezugsfühler, der Schnelltaktfühler und der Überfüllfühler mit unterschiedlicher Höhenlage ihrer Enden in den Sekret-Sammelraum hinein. Auch kann man diese außen an der Seitenwand sinngemäß entsprechend Ihrer Wirkungsweise in unterschiedlichen Höhen anordnen oder in sie integrieren. Eine besonders zweckmäßige Ausführung sieht vor, daß die in unterschiedlicher Höhe im Sekret-Sammelraum angeordneten Füllstandsfühler mit einer gemeinsamen Trageinrichtung ausgestattet sind, die in der Seitenwand des Gehäuses herausnehmbar und abgedichtet angeordnet ist. So kann die Serviceperson diese Fühler ohne Demontage des Gerätes herausnehmen und sie auf ihre Funktionsfähigkeit überprüfen, ggf. reinigen oder durch andere ersetzen. Diese Fühler werden in üblicher Weise in die elektronische Taktsteuerung einbezogen und mit entsprechenden Eigenschaften ausgestattet.

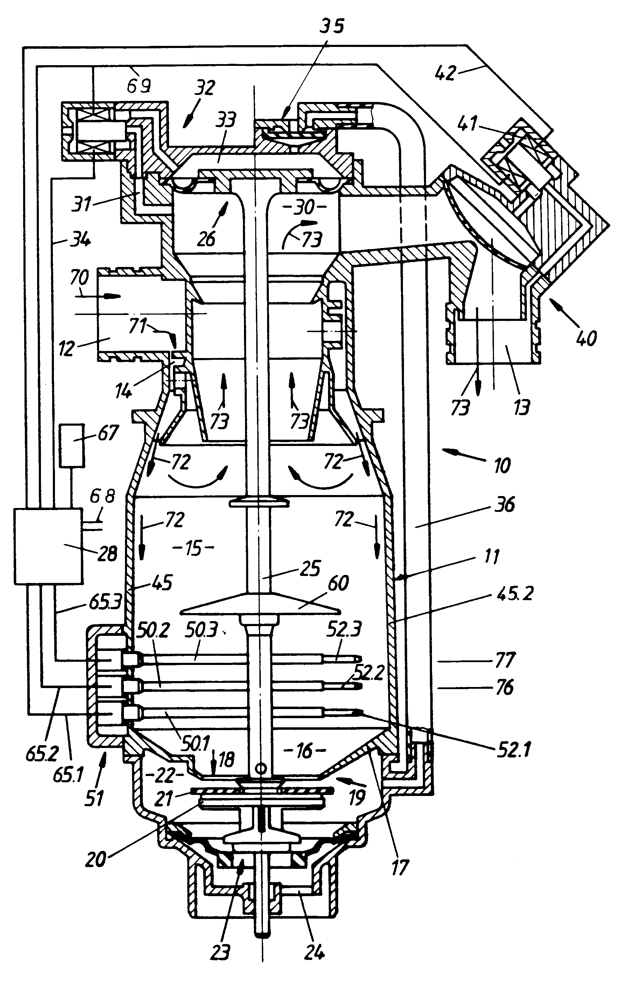

Dabei können unterschiedlich angeordnete und ausgebildete Fühler an der gemeinsamen Trageinrichtung vorgesehen sein, je nachdem wie das Empfangs- und Auswertesystem gestaltet ist. Eine besonders einfache und sicher wirkende Anordnung sieht vor, daß die Fühler sich quer durch den Sekret-Sammelraum erstrecken und ihre Enden in der Nähe der der Trageinrichtung gegenüberliegende Innenfläche der Seitenwand des Sekret-Sammelraumes liegen. So kann man ohne Beeinträchtigung des Flüssigkeitsstromes im Bereich der Fühler diese in geeignete Abstände zur Seitenwand und damit in einen geeigneten Bereich des Flüssigkeitsstromes bringen und ihnen trotzdem ausreichende Längen und geeignete Abstände geben. Flüssigkeitsstrom, Kriechstrecken und Kontaktlängen können somit gut berücksichtigt werden. Vor allem zur Beruhigung des Flüssigkeitsspiegels im Sekret-Sammelraum wird zweckmäßigerweise zwischen diesem und dem Reinluftbereich des Abscheideraumes eine Trennscheibe vorgesehen. Sie ist oberhalb der Fühler angeordnet. Sie kann beispielsweise auf einem zentralen Ventilstößel angeordnet sein. Sie verhindert das Mitreißen von Flüssigkeit aus dem Sekret-Sammelraum in den Reinluftbereich des Abscheideraumes. Weitere Einzelheiten, Vorteile, Merkmale und Gesichtspunkte der Erfindung sind auch in der nachfolgenden, anhand der Zeichnung eines Ausführungsbeispieles abgehandelten Beschreibung behandelt.
Die einzige Figur zeigt einen schematisierten Vertikalschnitt durch die Vorrichtung mit einem integrierten, stark vereinfachten Schaltplan.

Die Vorrichtung 10 hat ein Gehäuse 11 mit einem Flüssigkeits-Feststoff-Gemisch-Einlaß 12 und mit einem einem Reinluft-Auslaß 13. An den Gemisch-Einlaß 12 schließt sich ein Zyklon 14 an, mit dessen Hilfe die flüssigen und festen Bestandteile abgeschieden und an die Außenwand des Abscheideraumes 15 in einer Spiralbewegung herabgeführt werden, bis sie den Sekret-Sammelbereich oder Sekret-Sammelraum 16 erreichen. Dieser hat einen schrägen Boden 17, der in eine Sekret-Ablaß-Öffnung 18 ausläuft. Die Sekret-Ablaß-Öffnung 18 ist mit einem Ablaßventil 19 ausgestattet, welches einen in bekannter Weise geeignet ausgebildeten heb- und senkbaren Ventilteller 20 mit geeigneter Dichtung 21 aufweist. Unterhalb des Ablaßventils 19 ist ein Schleusenraum 22 gebildet, dem ein Schleusen-Ablaß-Ventil 23 zugeordnet ist, welches bei entsprechender Betätigung den Schleuseninhalt durch den Flüssigkeits-Feststoff-Auslaß 24 in eine geeignete Sammeleinrichtung und/oder zum Kanal führt. Für die Betätigung der beiden Ventile 19 und 23 ist ein Ventilstößel 25 vorgesehen, der sich im Innern vertikal durch die ganze Vorrichtung erstreckt und an seinem Kopf mit einer pneumatisch betätigten Hub- und Senkeinrichtung 26 grundsätzlicher bekannter Bauart ausgestattet ist. Beim Heben des Ventilstößels 25 schließt sich das Ablaßventil 19 und das Schleusen-Ablaß-Ventil 23 öffnet sich beispielsweise in der Art, wie es in der deutschen Patentschrift 27 13 321 im einzelnen beschrieben ist. Um das mit Hilfe des in der Vorrichtung ohnehin wirkenden Unterdruckes zu erreichen, zweigt aus dem Reinluftraum 30 eine Steuerleitung 31 zu einer geeigneten Ventileinrichtung 32 ab. Diese ist mit der zugeordneten Schalteinrichtung 28 über die Leitung 34 verbunden. Die Einrichtungen lassen wahlweise Unterdruck in den Steuerraum 33 eintreten oder verbinden diesen mit der Atmosphäre, so daß entweder der Ventilstößel 25 samt der Ventilteller und ggf. ihrer Dichtungen angehoben oder abgesenkt wird, je nachdem welche Schaltstellung die hier beispielsweise elektromagnetisch betätigte Ventileinrichtung 32 einnimmt. Den im Kopf der Vorrichtung angeordneten Einrichtungen für die Betätigung der Ventile 19, 23 ist auch ein in der vorgenannten Patentschrift behandeltes Schleusen-Belüftungs-Ventil 35 zugeordnet welches mit Hilfe einer Schleusen-Belüftungs-Leitung 36 bedarfsweise den Schleusenraum 22 mit Atmosphärendruck oder mit dem Unterdruck im Sammelraum 15/16 direkt beaufschlagt oder dazu den Druckausgleich durch das Ablaßventil 19 zuläßt. Das Schleusen-Belüftungs-Ventil 35 gibt mit Hilfe seiner Membran bei im Steuerraum 33 herrschendem Unterdruck die Verbindung von der Schleusen-Belüftungs-Leitung 36 zur Atmosphäre frei. Dann sind Stößel 25 und Ventilteller 20 angehoben und das Ablaßventil 19 ist geschlossen, während das Schleusen-Ablaß-Ventil 23 öffnet. Das Schleusen-Belüftungs-Ventil 35 arbeitet also in Abhängigkeit von der Ventileinrichtung 32 und kann demgemäß als Bestandteil derselben betrachtet werden oder unmittelbar mit Ihr zusammengefaßt sein. Es schaltet im gleichen Takt wie die anderen Ventile, zumal es der taktweisen Entleerung des Schleusenraumes 22 dient.

Das Überfüllventil 40 ist in bekannter, konstruktiv etwas abgewandelter Form ausgebildet, wie es grundsätzlich in der vorgenannten, älteren Patentschrift der Anmelderin behandelt ist. Es enthält ein Elektromagnet-Ventil 41, welches über die Leitung 42 mit der Schalteinrichtung 28 verbunden ist.

Durch die Seitenwand 45 des Gehäuses 11 ragen von der auf der Zeichnung linken Seite drei Fühler 50 in den SekretSammelraum 16. Sie sind an einer gemeinsamen Fühler-Trageinrichtung 51 befestigt und gemeinsam gehalten. Geeignete Abdichtungen in der Seitenwand 45 sichern die Dichtheit an den Durchbrüchen in der Seitenwand 45. Die Fühler 50.1, 50.2 und 50.3 bestehen aus sich horizontal in geeigneter Höhenlage quer durch den Sekret-Sammelraum 16 erstreckenden, teilweise isolierten Stiften. Ihre Enden 52.1 bis 52.3 liegen im Bereich der der FühlerTrageinrichtung 51 gegenüberliegenden Seitenwand 45.2 im Flüssigkeitsstrom.

Auf dem Ventilstößel 25 ist eine Trennscheibe 60 befestigt. Diese hat Pilzform. Sie kann auch mit Hilfe von Stegen fest zwischen den entsprechenden Bereichen der Seitenwand 45 angeordnet sein. Der geringfügige Hub der Trennscheibe 60 behindert ihre Funktion nicht. Sie dient der Beruhigung der Oberfläche der angesammelten Flüssigkeit.

Jeder der Fühler 50.1 bis 50.3 ist mit einer geeigneten Leitung 65.1 bis 65.3 mit der zentralen Schalteinrichtung 28 verbunden. Diese hat eine geeignete Ausbildung in Form elektronischer Bauteile. Ihr ist ein Taktgeber 67 zugeordnet. Die Versorgungsleitungen sind mit 68 bezeichnet. Die Masse-Leitung 69 führt zu den Eletromagneten der Ventile 32 und 41.

Die Vorrichtung arbeitet folgendermaßen:
Wenn der Benutzer den Saugstrom einschaltet, wird die Spannung für den gesamten Betrieb eingeschaltet. Unterdruck entsteht am Reinluft-Auslaß 13, der Gemisch-Strom oder nur Luft tritt durch den Flüssigkeits-Feststoff-Gemisch-Einlaß 12 gemäß dem Pfeil 70 ein und gelangt gemäß Pfeil 71 ins Zyklon 14 und durch dessen Ausgestaltung in eine Spiralbewegung nach unten. Dabei fließen flüssige und feste Bestandteile gemäß den Pfeilen 72 innen an der Seitenwand 45 in den Sekret-Sammelbereich 16. Die davon abgetrennte reine Luft gelangt gemäß den Pfeilen 73 durch den Reinluftraum 30 und den Reinluft-Auslaß 13 zur nicht dargestellten Saugmaschine üblicher Bauart.

Gleichzeitig mit dem Einschalten des Saugstromes setzt die Schalteinrichtung 28 mit Hilfe des Taktgebers 67 den Grundtakt in Gang und betätigt die Ventileinrichtung 32 in einem Grundtakt von beispielsweise 6 Takten je Minute so, daß sich evtl. im Sekret-Sammelbereich 16 sammelndes Sekret durch Öffnen des Ablaßventiles 19 in den Schleusenraum 22 gelangen und von dort durch das Schleusen-Ablaßventil 23 und den Flüssigkeits-Feststoff-Auslaß 24 austreten kann.

Der untere Fühler 50.1 stellt den Massekontakt dar. Der darüber liegende Fühler 50.2 stellt den Schnelltaktfühler dar und der oberste Fühler 50.3 stellt den Überfüllfühler dar.

Verbleibt die Sekretansammlung infolge der regelmäßigen und ständigen, taktweisen Entleerung stets unter der Höhenmarke 76, so läuft die Vorrichtung dauernd bis zum Abschalten mit dem Grundtakt.
Erreicht nun jedoch infolge größeren Anfalls der Flüssigkeits-Feststoff-Anteil etwa die Höhenmarke 76 und damit den Schnelltaktfühler 50.2, so tritt durch die Flüssigkeit eine leitende Verbindung zwischen dem Schnelltaktfühler 50.2/52.2 und dem Massekontakt 50.1/52.1 ein und es wird über die Schalteinrichtung 28 mit Hilfe des Taktgebers 67 ein schnellerer Takt, beispielsweise von etwa 32 Takten je Minute so lange eingeschaltet, wie die leitende Verbindung zwischen den vorerwähnten Kontakten besteht und die Ventileinrichtunge 32 und 35 und damit die Ventile 19 und 23 werden in einem entsprechend schnelleren Takt geschaltet, so daß größere Mengen von angesammeltem Sekret in kürzerer Zeit aus dem Sekret-Sammelraum 16 herausgefördert werden können. Verzögerungseinrichtungen verhindern, daß bei kurzzeitiger Unterbrechung der leitenden Verbindung der Takt zu früh zurückgeschaltet wird. Sinkt der Spiegel jedoch längerfristig ab und verläßt den Fühler 50.2, so daß der Vorrichtung das Signal für den Schnelltakt fehlt, so kehrt sie selbsttätig auf den Grundtakt zurückkehrt. Sollte der Anfall von Sekret so groß sein, daß die Ansammlung im Sammelraum den Überfüllfühler 50.3, also mindestens die Höhenmarke 77 erreicht, so wird die leitende Verbindung vom Massekontakt 50.1 zum Überfüllfühler 50.3 hergestellt und die Schalteinrichtung 28 schaltet das Magnetventil 41 um, so daß das Überfüllventil 40 mit Hilfe seiner Unterdrucksteuerung den Saugstrom abschaltet und damit die ganze Anordnung sich in bekannter Weise auf Atmosphärendruck einspielt und die Ablaßventile 19 und 23 öffnen und alles Sekret abfließen lassen. Es erfolgt auch kein Saugstrom mehr und demgemäß kann keine Flüssigkeit in den Reinluftraum 30 und den Reinluft-Auslaß 13 und damit zur empfindlichen Saugmaschine gelangen.

Die Vorrichtung ist einfach und sicher im Aufbau und kann konstruktiv auf vielfältige Weise abgewandelt werden.

Nachfolgend wird ein wichtiger Teil der Beschreibung wiedergegeben:
Die Vorrichtung (10) hat ein Gehäuse (11) mit einem Flüssigkeits-Feststoff-Gemisch-Einlaß (12) und einem Reinluft-Auslaß (13) sowie einem Abscheideraum (15), der unten in einen Sekret-Sammelbereich (16) übergeht, unter dem ein Ablaßventil (19), ein Schleusenraum (22) und ein Schleusen-Ablaß-Ventil (23) sowie ein Flüssigkeits-Feststoff-Auslaß (24) vorgesehen sind. Im Sekret-Sammelbereich (16) sind in unterschiedlicher Höhe Fühler (50.1 bis 50.3) angeordnet, die mit Hilfe einer Schalteinrichtung (28) und eines Taktgebers (67) und der Ventileinrichtung (23) und der Hub- und Senkeinrichtung (26) die Verschlußorgane der Ventile (19, 23) mit unterschiedlicher Taktfolge betätigen, wobei die Betätigung im Takt vorgebbar und in Abhängigkeit vom Füllstand im Sekret-Sammelbereich (16) erfolgt.

## Patentansprüche

1. Vorrichtung zum Abscheiden von flüssigen und festen Bestandteilen, wie Wasser, Blut, Speichel, Zahnsubstanz, Füllungsstoffen, aus dem aus dem Mund eines Patienten kommenden Saugmediengemisch mit folgenden Merkmalen:
- ein Gehäuse (11) hat
- einen Flüssigkeits-Feststoff-Gemisch-Einlaß (12), durch den das Gemisch in
- einen Abscheideraum (15) eintritt, in welchem es von flüssigen und festen Bestandteilen befreit wird und wobei die Saugluft über einen
- Reinluft-Auslaß (13) von einem abgesetzten Unterdruckerzeuger abgezogen wird und wobei die festen und flüssigen Bestandteile nach unten in einen
- Sekret-Sammel-Bereich (16) gelangen, unter dem
- ein Ablaßventil (19),
- ein Schleusenraum (22),
- ein Schleusen-Ablaß-Ventil (23) und
- ein Flüssigkeits-Feststoff-Auslaß (24) angeordnet sind und wobei die Schleusen-Verschluß-Organe der Ventile (19, 23) dem anfallenden Flüssigkeits-Feststoff-Gemisch-Volumen ensprechend betätigt werden,
**dadurch gekennzeichnet,**
daß im Sekret-Sammelraum (16) ein Schnelltaktfühler (50.2) angeordnet ist, der bei Erreichen einer vorbestimmten, größeren Füllhöhe (76) im Sekret-Sammelraum (16) die Steuerung (28, 32, 26) auf einen schnelleren Takt für die Betätigung der Schleusenventile (19, 23) umschaltet.

2. Vorrichtung nach Anspruch 1,
**dadurch gekennzeichnet,**
daß der Schnelltaktfühler (50.2, 52.2) unterhalb eines Überfüllfühlers (50.3, 52.3) angeordnet ist.

3. Vorrichtung nach Anspruch 1 oder 2,
**dadurch gekennzeichnet,**
daß die in unterschiedlicher Höhe im Sekret-Sammelraum (16) angeordneten Fühler (50, 50.1 bis 50.3; 52.1 bis 52.3) für den Füllstand mit einer gemeinsamen Trageinrichtung (51) ausgestattet sind, die an der Seitenwand (45) herausnehmbar und abgedichtet angeordnet ist.

4. Vorrichtung nach einem der Ansprüche 1 bis 3,
**dadurch gekennzeichnet,**
daß die Fühler (50.1 bis 50.3) sich quer durch den Sekret-Sammelraum (16) erstrecken und ihre Enden (52.1 bis 52.3) in der Nähe der der Trageinrichtung (51) gegenüberliegenden Innenfläche der Seitenwand (45.2) des Sekret-Sammelraumes (16) liegen.

5. Vorrichtung nach einem der vorstehenden Ansprüche,
**dadurch gekennzeichnet,**
daß oberhalb des Sekret-Sammelbereiches (16) eine Trennscheibe (60) vorgesehen ist.

## Claims

1. A device for separating fluid and solid components such as water, blood, saliva, tooth material and filling materials from the suction medium mixture coming from the mouth of a patient, with the following features:
- a housing (11) comprises
- a fluid/solid mixture inlet (12), through which the mixture enters
- a separating chamber (15), in which the mixture is freed of fluid and solid components, and the suction air is drawn off
- via a clean air outlet (13) by a fixed underpressure generator, the solid and fluid components passing downwards into a
- secretion collecting region (16), below which are arranged
- an outlet valve (19),
- a sluice chamber (22),
- a sluice outlet valve (23) and
- a fluid/solid material outlet (24), the sluice sealing elements of the valves (19, 23) being actuated as a function of the fluid/solid material mixture volume which is present,
characterised in that a rapid cycle sensor (50.2) is arranged in the secretion collecting chamber (16), which rapid cycle sensor switches the control (28, 32, 26) to a quicker cycle for the actuation of the sluice valves (19, 23) when a given, higher filling level (76) is reached in the secretion collecting chamber (16).

2. A device according to claim 1, characterised in that the rapid cycle sensor (50.2, 52.2) is arranged beneath an overfill sensor (50.3, 52.3).

3. A device according to claim 1 or 2, characterised in that the sensors (50, 50.1 to 50.3; 52.1 to 52.3) for the filling level arranged at different heights in the secretion collecting chamber (16) are equipped with a common support device (51), which can be removed from the side wall (45) and is arranged in a sealing-tight manner.

4. A device according to one of claims 1 to 3, characterised in that the sensors (50.1 to 50.3) extend transversely through the secretion collecting chamber (16) and their ends (52.1 to 52.3) lie in the vicinity of the inner surface of the side wall (45.2) of the secretion collecting chamber (16) opposite the support device (51).

5. A device according to one of the preceding claims, characterised in that a separating disc (60) is provided above the secretion collecting chamber (16).

## Revendications

1. Dispositif pour séparer des ingrédients liquides et solides, comme l'eau, le sang, la salive, des substances dentaires, des matières de remplissage, hors du mélange aspiré provenant de la bouche d'un patient, avec les éléments suivants:
un boîtier (11) comporte une entrée (12) pour le mélange de matières solides et liquides, par laquelle le mélange pénètre dans un espace de séparation (15), dans lequel il est libéré des ingrédients liquides et solides et l'air aspiré est extrait par l'intermédiaire d'une sortie d'air pur (13) d'un générateur de dépression et les ingrédients solides et liquides parviennent en bas dans une région de collecte des sécrétions (16),sous laquelle sont agencées - une valve d'échappement (19), - une chambre de sas (22), - une valve d'écoulement de sas (23), et - une sortie des matières liquides et solides (24); et les organes de fermeture de sas des valves (19, 23) sont actionnés en fonction du volume de matières solides et liquides occasionné, caractérisé en ce que dans la chambre de collecte des sécrétions (16) est agencé un capteur à cadencement rapide (50.2), qui lorsque la hauteur de remplissage (76) atteint un niveau supérieur prédéterminé dans la chambre de collecte des sécrétions (16) bascule la commande (28, 32, 26) sur une cadence plus rapide pour l'actionnement des valves de sas (19, 23).

2. Dispositif selon la revendication 1, caractérisé en ce que le capteur à cadencement rapide (50.2, 52.2) est agencé au-dessous d'un capteur de trop-plein (50.3, 52.3).

3. Dispositif selon la revendication 1 ou 2, caractérisé en ce que les capteurs (50, 50.1 à 50.3; 52.1 à 52.3) de l'état de remplissage agencés à différentes hauteurs dans la chambre de collecte des sécrétions (16) sont équipés avec un moyen commun de montage (51), qui est agencé sur la paroi latérale (45) de manière amovible et étanchéifiée.

4. Dispositif selon l'une des revendications 1 à 3, caractérisé en ce que les capteurs (50.1 à 50.3) s'étendent transversalement à travers la chambre de collecte des sécrétions (16), et que leurs extrémités (52.1 à 52.3) se situent à proximité de la surface intérieure de la paroi latérale (45.2) de la chambre de collecte des sécrétions (16) opposée au moyen de montage (51).

5. Dispositif selon l'une des revendications précédentes, caractérisé en ce qu'un disque de séparation (60) est prévu au-dessus de la région de collecte des sécrétions (16).
